# EUROPEAN PATENT SPECIFICATION

(11) **EP 3 961 415 B1**
(45) Date of publication and mention of the grant of the patent: **13.09.2023**
(21) Application number: 21182721.7
(22) Date of filing: 30.06.2021
(51) Int. Cl.: G06F 16/9032, H04L 9/40, G06F 21/64

(54) **TRANSACTION CONFIRMATION METHODS AND APPARATUSES IN BLOCKCHAIN NETWORK**
TRANSAKTIONSBESTÄTIGUNGSVERFAHREN UND -GERÄTE IM BLOCKCHAIN-NETZWERK
MÉTHODES ET APPAREILS DE CONFIRMATION DE TRANSACTION DANS UN RÉSEAU DE BLOCKCHAIN

(30) Priority: 28.08.2020 CN 202010889845
(43) Date of publication of application: 02.03.2022
(73) Proprietor: Alipay (Hangzhou) Information Technology Co., Ltd., Hangzhou, Zhejiang 310000 (CN)
(72) Inventor: LIU, Xiaojian, Hangzhou, Zhejiang 310000 (CN)
(74) Representative: Goddar, Heinz J.

(56) References cited:
- CN-A- 111 047 449
- US-A1- 2019 311 358
- US-A1- 2020 160 289
- ROUHANI SARA ET AL: "Security, Performance, and Applications of Smart Contracts: A Systematic Survey", IEEE ACCESS, vol. 7, 26 April 2019 (2019-04-26), pages 50759-50779, XP011721689, DOI: 10.1109/ACCESS.2019.2911031 [retrieved on 2019-04-25]
- SAULO RICCI ET AL: "Learning Blockchain Delays", ACM SIGMETRICS PERFORMANCE EVALUATION REVIEW, ASSOCIATION FOR COMPUTING MACHINERY, NEW YORK, NY, US, vol. 46, no. 3, 25 January 2019 (2019-01-25), pages 122-125, XP058426265, ISSN: 0163-5999, DOI: 10.1145/3308897.3308952

## Description

### TECHNICAL FIELD

One or more embodiments of this specification relate to the field of blockchain technologies, and in particular, to transaction confirmation methods and apparatuses in a blockchain network.

### BACKGROUND

A blockchain technology is a new application mode of using computer technologies such as point-to-point transmission, a consensus mechanism, and an encryption algorithm to implement distributed data storage. In a blockchain network, data is stored and recorded through transactions. In early blockchain networks, only transfer transactions are supported. At present, an increasing number of blockchain platforms support smart contracts, to execute more varied transactions. In this way, the blockchain platforms allow users to execute transactions with more varied content, to provide more varied functions.

Generally, a blockchain network is formed by a plurality of nodes. These nodes generate a new block by using a consensus mechanism, to perform a transaction in the block. At least a portion of these nodes may be used as servers or blockchain platforms to interact with users. A user sends a transaction by using such a platform node. The platform node broadcasts the transaction of the user in the blockchain network, for the nodes to reach consensus on the transaction and accurately execute the transaction. After the transaction is accurately executed, the platform node returns, to the user, an execution result of the transaction by the blockchain network. This is referred to as transaction confirmation. The time taken for the user to send the transaction and the platform node to return the execution result of the transaction by a blockchain system to the user is referred to as a transaction confirmation delay.

The transaction confirmation delay is closely related to user experience. If the user fails to receive transaction confirmation information in time after sending the transaction, the experience of using the blockchain platforms by the user is clearly significantly reduced. However, conventionally, reduction of the transaction confirmation delay conflicts with high throughput (transactions per second, TPS) of the blockchain platforms, and it is difficult to ensure performance in both aspects.

Therefore, it is desirable to provide an effective solution that can reduce a transaction confirmation delay without impairing throughput of a platform, thereby enhancing user experience and improving performance of a blockchain platform.

CN 111047449 A discloses a method and a device for executing a transaction in a block chain. The method includes speculative execution before the transaction is consensus, and formal execution based on the consensus. The speculation execution process comprises the following steps: firstly, reading a locally recorded first transaction; executing transaction logic in the first transaction, and recording a variable operation request corresponding to an execution result in a memory; marking the transaction as a commissioned transaction. The formal execution process comprises the steps of obtaining a consensus and to-be-executed second transaction; judging whether the second transaction is a transaction executed by the speculation or not, and if so, obtaining a corresponding variable operation request which is not submitted yet; judging whether speculation execution of the second transaction conflicts with consensus-based transaction execution or not according to the variable operation request; and if no conflict exists, directly submitting the variable operation corresponding to the variable operation request.

### SUMMARY

The present invention is defined by the appended set of claims. Preferred embodiments are defined by dependent claims. A transaction confirmation mechanism is described in one or more embodiments of this specification, to reduce a transaction confirmation delay, enhance user experience, ensure throughput of a platform, and improve performance of the platform.

For the method and apparatus provided in the embodiments of this specification, consensus is initiated in batches, and a flow execution result is summarized in subbatches with fewer transactions to confirm a transaction, thereby reducing a consensus wait time, an execution wait time, and a confirmation wait time of a transaction, to significantly reduce a transaction confirmation delay. In addition, in the foregoing solution, in a manner of separating persistence and transaction execution in parallel, persistence overheads are concealed, thereby reducing the impact of a small batch of consensus on the TPS of a platform and ensuring TPS performance of the platform.

### BRIEF DESCRIPTION OF THE DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.
FIG. 1 is a schematic diagram of transaction sending to transaction confirmation in a typical scenario;
FIG. 2 is a schematic diagram of a transaction processing process, according to an embodiment;
FIG. 3 shows a data list maintained in a node 0;
FIG. 4 is a schematic flowchart of transaction confirmation, according to an embodiment;
FIG. 5a to FIG. 5d respectively show specific examples of a first event;
FIG. 6 is a schematic diagram of transaction status conversion, according to an embodiment; and
FIG. 7 is a schematic block diagram of a transaction confirmation apparatus in a node, according to an embodiment.

### DETAILED DESCRIPTION OF THE INVENTION

The solutions provided in this specification are described below with reference to the accompanying drawings.

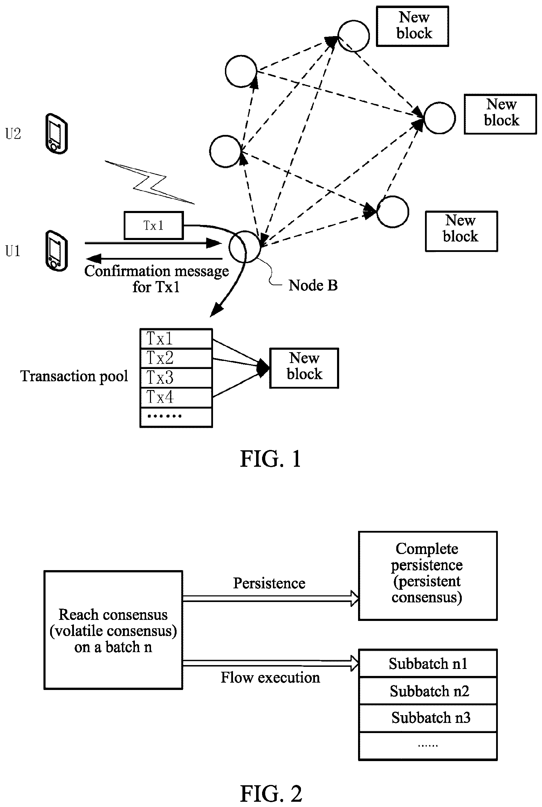

FIG. 1 is a schematic diagram of transaction sending to transaction confirmation in a typical scenario. First, a blockchain network includes a plurality of nodes. The nodes may perform communication. Some nodes may be used as platforms that are connected to a plurality of user terminals. In this case, the user terminals may be connected to the blockchain network by platform nodes.

It is assumed that a node B in the network is used as a platform that is connected to user terminals. FIG. 1 exemplarily shows user terminals U1 and U2. It is assumed that a user is connected to the platform node B by the user terminal U1 and sends a transaction Tx1. The transaction Tx1 may be an ordinary transfer transaction or may be a transaction of creating a smart contract or a transaction of invoking a smart contract.

Each node maintains one transaction pool locally, places a received transaction in the transaction pool, and at the same time further broadcasts the received transaction to other nodes. The node B places both a transaction received by the user terminal (for example, the foregoing Tx1) and a broadcast transaction received from another node in the transaction pool. When there are sufficient transactions in the transaction pool, the node B retrieves some transactions from the transaction pool, and pack the transactions into a block. The block includes, for example, the foregoing transaction Tx1. Next, the node B may broadcast, in the blockchain network, the transactions packed by the node B in order to reach a consensus. In addition, other nodes in the blockchain network may also broadcast transactions packed by the other nodes in order to initiate consensus. Theoretically, by using a P2P propagation mechanism of the blockchain network, each transaction is propagated to each node. However, for reasons such as an actual transmission delay of the network, transactions in transaction pools of different nodes are different. Therefore, transaction blocks packed by the nodes are usually also different. Finally, by using a consensus mechanism set in the blockchain network, the nodes reach a consensus on a transaction block that needs to be executed subsequently. In an implementation, a master node may be configured. A consensus can be reached via the master node. Other nodes all acquire, from the master node, a list of transactions that need to be executed subsequently, and use the list of transactions as a consensus result.

Next, each node performs local persistent storing of a transaction block on which consensus is reached, and transactions in the transaction block on which consensus is reached are sequentially performed, in order to keep consistent data content recorded in nodes of the entire network. For the foregoing transaction Tx1, the node B needs to reach consensus on a transaction block including Tx1, stores the transaction block, and needs to execute the transaction block before the node B can return a confirmation message related to an execution result of the transaction Tx1 to the user terminal U1.

As can be seen from the foregoing process, main factors that affect a transaction confirmation delay include a consensus wait time, a network delay in consensus, a persistence delay in consensus, a delay of waiting for a transaction to be executed, a transaction execution delay, and a delay of waiting for a transaction to be confirmed.

In another aspect, main factors that affect a transaction throughput (TPS) of the platform include a consensus time, a transaction execution time, and a transaction result persistence time. Generally, when an average consensus time and an average persistence time of a unit transaction are shorter, the TPS of the platform is larger. It needs to be understood that the persistence time is not significantly affected by the size of content being made persistent, but is closely related to a quantity of times of performing persistence. For example, information of 10 k and 100 k is persistently recorded once, and a time required for the information of 10 k and a time required for the information of 100 k is quite close. However, if each time information of 10 k is recorded and the recording is performed ten times, a total time is much longer than a time of recording information of 100 k once. Therefore, people usually increase a quantity of consensus transactions in one batch to reduce time costs for consensus and persistence of each transaction, thereby increasing the TPS. For example, in some existing solutions, consensus is reached in blocks. According to the settings of different blockchain systems, one block usually includes hundreds of transactions (for example, 300 transactions). In this way, the hundreds of transactions share time costs for consensus and persistence together.

However, if the quantity of consensus transactions in one batch is relatively large, delays of waiting for a transaction to be executed and waiting for the transaction to be confirmed are increased, resulting in an increase in a total delay for confirming the transaction. For example, if a transaction is located near the top in a consensus block (for example, near the first few transactions of 300 transactions), the transaction can be confirmed only after the 300 transactions in this block have been executed. For a transaction near the end in a consensus block, because transactions need to be sequentially executed, this transaction usually can be executed only after all transactions in front of the transaction have been executed, and a delay of waiting for the transaction to be executed is relatively long.

Therefore, conventionally, an increase in throughput (TPS) conflicts with reduction of a transaction confirmation delay, and it is very difficult for the platform to ensure performance in both aspects.

In consideration of the foregoing cases, embodiments of this specification provide an improved solution. The solution minimizes the impact on the TPS while reducing the transaction confirmation delay. According to the concept of the solution, to reduce a consensus wait time of a transaction, ways of improving the frequency of consensus, reducing a consensus interval, and reducing the quantity of consensus transactions in one batch are adopted to improve delay performance. An increase in the frequency of consensus can cause an increase in persistence overheads in a consensus process. To prevent a synchronous wait for persistence during consensus of a small batch from impairing the throughput of the system, this solution proposes a way of implementing persistence and transaction execution in parallel in order to conceal persistence overheads. To further reduce a delay of waiting for a transaction to be executed and/or a delay of waiting for a transaction to be confirmed in one consensus batch, the solution in the embodiments further proposes a flow confirmation process. That is, in one consensus batch, a transaction execution result is summarized in subbatches of smaller quantities. When transaction execution of a subbatch meets a preset condition, a transaction in the subbatch may be confirmed, thereby further reducing the transaction confirmation delay.

Specific implementation of the foregoing concept is described below.

FIG. 2 is a schematic diagram of a transaction processing process, according to an embodiment. As discussed above, in embodiments of this specification, consensus is initiated in small batches by ways of increasing the frequency and reducing time intervals. For example, the consensus time interval may be reduced from conventional 500 ms to approximately 50 ms. Correspondingly, a number of transactions in each consensus batch is also reduced. For example, one consensus batch includes 40 transactions. Such a quantity is far less than a quantity (for example, hundreds of transactions) of transactions in one block. Specific values of the interval time and the transaction quantity in the foregoing are only examples. A person skilled in the art may make changes and settings as required within the concept of this specification.

According to embodiments of this specification, a consensus process of each transaction batch may be classified as a volatile consensus and a persistent consensus. When nodes reach, according to a consensus protocol, an agreement on transactions to be executed and an execution order of the transactions, the nodes may acquire a list of transactions (the list of transactions may be received from another node or may be determined locally according to a consensus algorithm) on which the agreement is reached. In this case, the list of transactions is usually recorded in volatile storages (for example, random-access memory, and cache) of the nodes, and such a state may be referred to as volatile consensus. Subsequently, the nodes make the transactions persistent in the list in a volatile consensus state. After all the nodes have made persistent the transactions in the list, this batch of transactions reach a persistent consensus state.

For ease of description below, the volatile consensus state is referred to as consensus reached for short. When consensus is reached on a transaction batch, it means that consensus has been reached on the transaction batch but the persistence of the transaction batch is not completed.

To conceal persistence overheads, according to an embodiment, once consensus is reached on a batch of transactions (for example, a batch n of transactions in FIG. 2), that is, when the volatile consensus state is reached, while the transactions start to be made persistent, the transactions are added to a to-be-executed transaction queue, transactions start to be executed in parallel, and execution results of subbatches are recorded in a flow. A subbatch may include a smaller quantity of transactions than a consensus batch. In this way, one transaction batch may include a plurality of subbatches. For example, the batch n in FIG. 2 includes a subbatch n1, a subbatch n2, and the like. In a specific example, it is assumed that one consensus batch includes 40 transactions, and one subbatch may include 8 or 10 transactions.

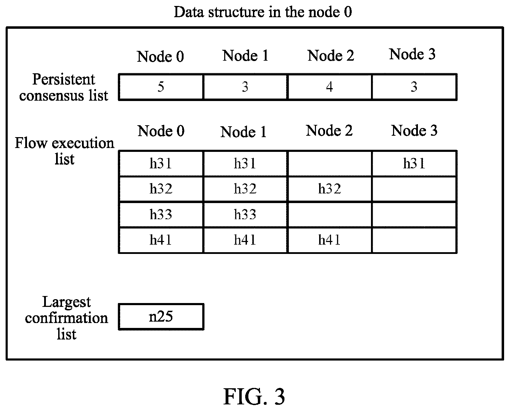

Based on that the foregoing persistence making and flow execution are in parallel, to implement the foregoing concept of small batch of consensus and flow confirmation, data structures maintained by nodes also need to be changed. FIG. 3 shows a data structure maintained in a blockchain node according to an embodiment. In the example in FIG. 3, it is assumed that the blockchain network includes four nodes: nodes 0, 1, 2, and 3. FIG. 3 shows a data list maintained in the node 0. It needs to be understood that the nodes in the blockchain network all maintain similar data lists with the same structure.

As shown in FIG. 3, a data structure maintained by the node 0 includes a persistent consensus list, a flow execution list, and a largest confirmation list. The lists are described below in detail respectively.

The persistent consensus list is used to record largest batch information for which each node in the blockchain network completes persistent storing for a transaction batch on which consensus is reached, that is, current persistent largest transaction batch information of each node. The largest batch information may be a batch number of a persistent largest batch or may be the largest transaction number in the largest batch.

As discussed above, for the transaction batch on which consensus is reached, the nodes separately make persistent the transaction batch. For any one node i, once the persistence of one transaction batch is completed, the node i records, in an entry corresponding to the current node i in the persistent consensus list, the latest transaction batch for which persistence has been currently completed. In addition, the latest largest transaction batch information is further broadcast to other nodes. In addition, the node i also receives largest transaction batch information broadcast and reported by another node, thereby continuously updating the persistent consensus list.

FIG. 3 provides description by using a batch number as an example. According to the example in FIG. 3, for a transaction batch on which consensus is reached, the largest transaction batch for which the node 0 currently has completed persistence is a batch 5, the largest transaction batch that is reported by the node 1 and for which persistence has been completed is a batch 3, the largest batch reported by the node 2 is a batch 4, and the largest batch reported by the node 3 is a batch 3.

It needs to be understood that, the foregoing is a current state of the persistent consensus list recorded in the node 0. Due to other factors such as network delays, data content in a persistent consensus list recorded in another node and that in the node 0 may be different, but have the same principle and structure.

In another aspect, the flow execution list is used to record an execution result by each node of a transaction subbatch in the transaction batch on which consensus is reached. As discussed above, for the transaction batch on which consensus is reached, the nodes separately sequentially execute transactions in the transaction batch, and record execution results of subbatches. For any one node i, when the node i executes transactions in one subbatch, an execution result of the subbatch is added to an entry corresponding to the current node i in the flow execution list, and in addition, further broadcasts the execution result of the subbatch to other nodes. In addition, the node i also receives, from another node, execution results, broadcast and reported by the another node, of transaction subbatches by the another node, thereby continuously updating the flow execution list.

The foregoing execution result of the transaction subbatch may be a variable value after the transactions are executed or may be a hash value obtained after hash operation is performed on the execution result.

FIG. 3 provides description by using an example in which a hash value is used as an execution result of a transaction. According to the example in FIG. 3, the node 0 has generated execution results h31, h32, and h33 of all subbatches in the consensus batch 3 and has generated an execution result h41 of a first subbatch of transactions in the batch 4. The execution of the node 1 is the same as that of the node 0. Execution results of transactions reported by the node 2 include an execution result h32 of the second subbatch of transactions in the batch 3 and an execution result h41 of the first subbatch in the batch 4. An execution result of transactions reported by the node 3 includes an execution result h31 of a first subbatch in the batch 3.

Similarly, the foregoing is a current state of the flow execution list recorded in the node 0. Due to other factors such as network delays, data content in a flow execution list recorded in another node and that in the node 0 may be different, but have the same principle and structure.

In addition, a largest confirmation list is further maintained in each node. The largest confirmation list is used to record largest subbatch information confirmed in a current node. For example, in FIG. 3, the largest subbatch currently confirmed by the node 0 is n25, that is, the fifth subbatch in the second batch.

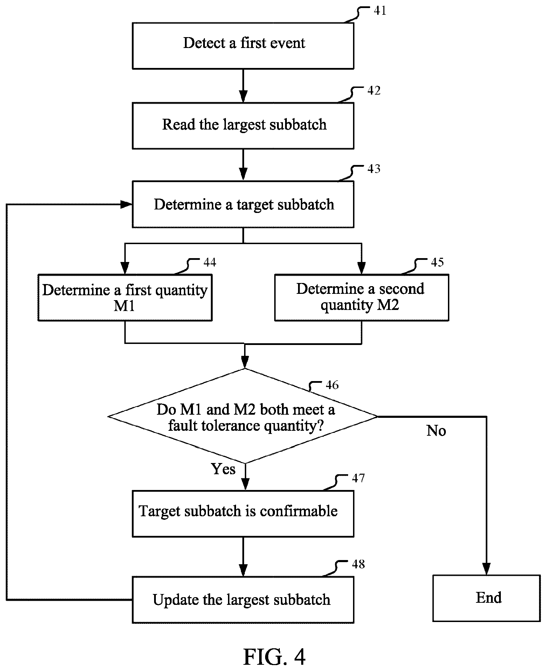

Based on the transaction processing process shown in FIG. 2 and the data structure shown in FIG. 3, the nodes may confirm, with shorter delays, transactions that are accurately executed, to implement reduction of a transaction confirmation delay. FIG. 4 is a schematic flowchart of transaction confirmation, according to an embodiment. The procedure may be performed by any node. For ease of description, the any node is referred to as a first node. The node 0 is still used as an example for description below. The node 0 maintains the data structure shown in FIG. 3. The data structure includes the persistent consensus list, the flow execution list, and the largest confirmation list.

In the transaction confirmation process, in step 41, the first node continuously monitors the persistent consensus list and the flow execution list, to capture an event that causes the persistent consensus list or the flow execution list to change. For simplicity, such an event is referred to as a first event.

For example, the first event includes receiving a first message from another node, where the first message indicates updated largest transaction batch information for which the another node completes persistent storing. In this way, the first node needs to update the persistent consensus list. Largest batch information corresponding to the another node is updated to the largest transaction batch information in the first message.

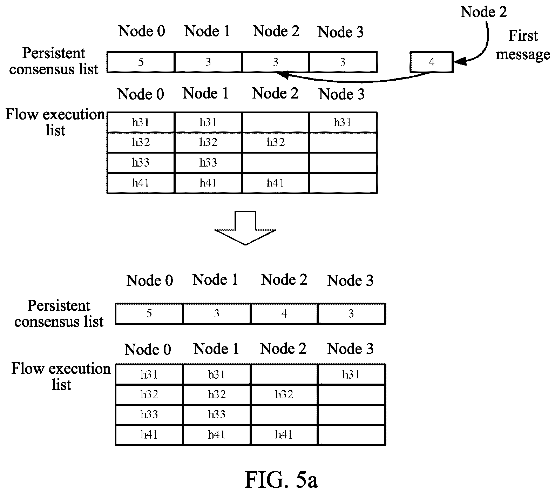

FIG. 5a shows a specific example of a first event. According to FIG. 5a, it is assumed that the persistent consensus list and the flow execution list maintained by the node 0 at a moment t1 are shown on the upper side. In the persistent consensus list, the largest batch for which the node 2 has completed persistence is a batch 3. Next, the node 0 receives the first message of the node 2. The first message indicates that the node 2 has completed the persistence of a batch 4, and the largest transaction batch currently made persistent is updated to the batch 4. In response to the first message, the node 0 updates the persistent consensus list of the node 0. The largest batch of the node 2 is updated to the batch 4, obtaining the updated persistent consensus list on the lower side. The foregoing update of the persistent consensus list in response to the first message is an example of the first event.

In another example, the first event includes receiving a second message from another node, where the second message indicates an execution result of a newly added transaction subbatch by the another node. In this way, the first node needs to update the flow execution list, and the execution result of the newly added transaction subbatch by the another node is added to the flow execution list.

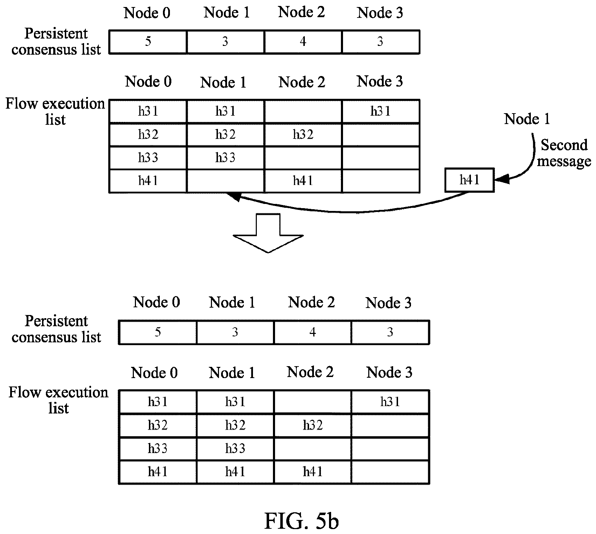

FIG. 5b shows another specific example of a first event. According to FIG. 5b, it is assumed that a persistent consensus list and a flow execution list maintained by the node 0 at a moment t2 are shown on the upper side. Next, the node 0 receives the second message of the node 1. The second message indicates that the node 1 newly generates an execution result h41 of the first subbatch of the transactions in the batch 4. In response to the second message, the node 0 updates the flow execution list of the node 0. The newly added execution result h41 is added to the entry of the node 1, obtaining the updated flow execution list on the lower side. The foregoing update of the flow execution list in response to the second message is another example of the first event.

In addition, the first event may be alternatively update of a persistence status or a flow execution status of the first node by the first node. It is assumed that the first node currently has completed the persistence of an n-th batch. It needs to be understood that the (volatile) consensus and persistence of the transaction may be performed in different threads in parallel. Therefore, it may be assumed that in this case, volatile consensus is reached on a plurality of subsequent batches. In this case, the first node may acquire, from a volatile storage, a next batch, that is, an (n+1)-th batch, on which consensus is reached, and start to perform persistent storing of the next batch. In addition, the first node adds transactions in the (n+1)-th batch to a to-be-executed transaction queue to sequentially execute the transactions, to generate a subbatch execution result.

Once the persistent storing of the foregoing (n+1)-th batch is completed, the first node updates largest batch information corresponding to the current node in the persistent consensus list with the (n+1)-th batch. Such an update also forms the first event. In addition, the first node further broadcasts the information of the (n+1)-th batch to other nodes in a message form (a third message), for the other nodes to update, according to the third message, persistent consensus lists maintained by the other nodes.

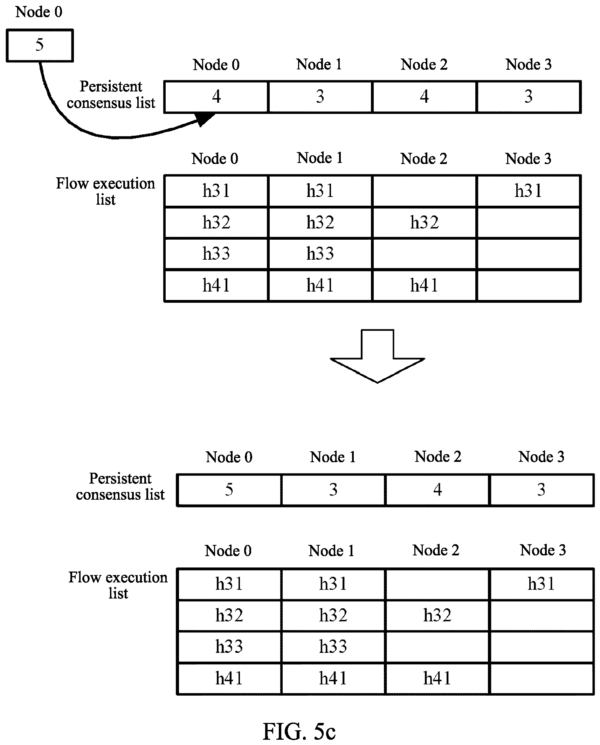

FIG. 5c shows another specific example of a first event. According to FIG. 5c, it is assumed that a persistent consensus list and a flow execution list maintained by the node 0 at a moment t3 are shown on the upper side. The largest batch made persistent by the node 0 is a batch 4. Subsequently, the node 0 has further completed the persistence of a batch 5. In this case, the largest batch information of the current node in the persistent consensus list is updated with the batch 5, obtaining the updated persistent consensus list on the lower side.

In addition, in a process in which the first node executes a transaction on which consensus is reached, every time a new subbatch execution result is generated, the newly generated subbatch execution result is added to the flow execution list and the entry corresponding to the current node in order to update the flow execution list. Such an update also forms the first event. In addition, the first node further broadcasts the newly generated subbatch execution result to other nodes in a message form (a fourth message), for the other nodes to update, according to the fourth message, flow execution lists maintained by the other nodes.

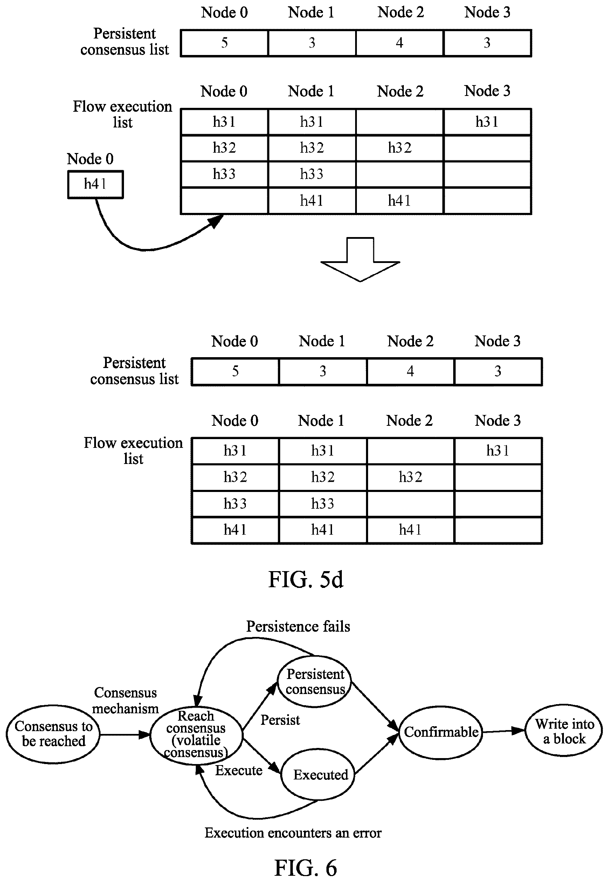

FIG. 5d shows another specific example of a first event. According to FIG. 5d, it is assumed that a persistent consensus list and a flow execution list maintained by the node 0 at a moment t4 are shown on the upper side. Subsequently, the node 0 further generates an execution result h41 of the first subbatch in the batch 4. In this case, the newly generated execution result h41 is added to the entry corresponding to the current node in the flow execution list, obtaining the updated flow execution list on the lower side.

Various cases of the first event are described above. A result of the first event is a change in the persistent consensus list or the flow execution list.

Returning to FIG. 4, once the foregoing first event is detected, in step 42, a current largest subbatch is read from the largest confirmation list. In step 43, a target subbatch is determined. Initially, a next subbatch of the current largest subbatch is used as the target subbatch.

For the target subbatch, in step 44, a first quantity M1 of nodes that generate consistent execution results for the target subbatch is determined based on the flow execution list. The first quantity M1 means that at least M1 nodes have generated and reported execution results for the target subbatch, and the execution results for the target subbatch by the M1 nodes are the same as each other.

In addition, in step 45, a second quantity M2 of nodes that complete persistent storing for a target batch to which the target subbatch belongs is determined based on the persistent consensus list. In other words, M2 nodes have completed the persistent storing of the batch to which the target subbatch belongs. When records are kept in batch numbers in the persistent consensus list, in step 45, a quantity of nodes corresponding to all nodes whose batch numbers are among largest batch numbers that are greater than or equal to a batch number of the target batch may be determined for use as the second quantity M2.

It needs to be understood that, steps 44 and 45 may be performed in any appropriate relative order, or may be performed in parallel. FIG. 4 exemplarily shows a case of parallel execution.

Next, in step 46, it is determined whether the first quantity and the second quantity both meet a consensus fault tolerance quantity corresponding to N nodes. The consensus fault tolerance quantity is related to the consensus protocol used by the N nodes. For example, when a Byzantine Fault Tolerance (BFT) consensus protocol is used, provided that it is ensured that N ≥ 3m + 1, the accurate consistency of consensus can be ensured, where N is a total quantity of nodes, and m is a quantity of nodes that encounter an error. The consensus fault tolerance quantity corresponding to the N nodes in the BFT protocol may be obtained according to the foregoing formula and the quantity N of nodes. For example, when N = 4, the consensus fault tolerance quantity is 3. That is, when three nodes in the four nodes generate consistent results, the accuracy of the results can be ensured. In a case of using another consensus protocol, the consensus fault tolerance quantity corresponding to the N nodes may be correspondingly determined.

If the first quantity and the second quantity both meet the consensus fault tolerance quantity, in step 47, transactions in the target subbatch are determined as confirmable transactions. In step 48, the current largest subbatch in the largest confirmation list is updated with the target subbatch. Subsequently, subsequent subbatches are sequentially used as the target subbatch, and the first quantity and the second quantity are determined again.

Description is provided below with reference to a specific example. It is assumed that after the first event occurs, the persistent consensus list, the flow execution list, and the largest confirmation list in the node 0 are shown in FIG. 3. In addition, the node 0 to the node 3 use the BFT consensus protocol, and the consensus fault tolerance quantity is 3.

In the example, in step 42, the read current largest subbatch is n25. In step 43, the next subbatch, that is, a first subbatch n31 in the third batch, is used as the target subbatch. In step 44, as can be seen from the flow execution list, the three nodes all have generated consistent execution results h31 for the subbatch n31. Therefore, the first quantity is M1 = 3.

In step 45, as can be seen from the persistent consensus list, all the four nodes have completed the persistence of the third batch. Therefore, M2 = 4.

Therefore, it may be obtained in step 46 that the first quantity M1 and the second quantity M2 both reach the consensus fault tolerance quantity. In this case, in step 47, transactions in the subbatch n31 are determined as confirmable transactions, and the current largest confirmed subbatch is updated to n31.

Next, a next subbatch n32 is used as the target subbatch. Similarly, in step 44, as seen from the flow execution list, the three nodes all have generated consistent execution results h32 for the subbatch n32. Therefore, the first quantity is M1 = 3. In step 45, as can be seen from the persistent consensus list, all the four nodes have completed the persistence of the third batch. Therefore, M2 = 4. Correspondingly, after the determining in step 46, in step 47, transactions in the subbatch n32 are determined as confirmable transactions, and the current largest confirmed subbatch is updated to n32.

When a next subbatch n33 is used as the target subbatch, it may be obtained in step 44 that only two nodes have generated consistent execution results h33 for n33. Therefore, M1 = 2. In this case, the consensus fault tolerance quantity is not met, and transactions in n33 cannot be confirmed.

If n41 is used as the target subbatch, as can be seen, the corresponding first quantity is M1 = 3, but only the node 0 and the node 2 have completed the persistence of the fourth batch. Therefore, the second quantity is M2 = 2, and the consensus fault tolerance quantity is not met. Therefore, the subbatch n41 cannot be confirmed.

In the process in FIG. 4, the first node may determine confirmable transaction subbatches. Next, a confirmation message needs to be sent to a corresponding user terminal to implement transaction confirmation for a user. However, transactions in the confirmable transaction subbatches may come from a plurality of platform nodes. For this purpose, in an embodiment, the nodes are set to return confirmation messages to user terminals that send transactions by using this platform.

For the first node, any transaction in the confirmable transaction subbatch is referred to as a first transaction. The first node determines whether the first transaction is a local transaction, that is, a transaction directly received by the first node from a user client; and if the first transaction is a local transaction, determines a first user client corresponding to the first transaction, and sends a confirmation message to the first user client. The confirmation message is used to indicate that the first transaction has been accurately executed.

In an embodiment, the foregoing execution results of a subbatch that are reported by the nodes in a flow include transaction identifiers of transactions in the subbatch, transaction execution results, and signatures of nodes. Confirmation messages for the transactions may be generated based on the execution results of the subbatch. For example, a transaction identifier of the first transaction may be acquired from execution results of a subbatch including the first transaction that are reported by the nodes. Execution results and node signatures of all the transactions in the subbatch are included in a confirmation message for the first transaction. In this way, a client may verify the confirmation message based on the execution result and the node signature of the foregoing subbatch. In an embodiment, the confirmation message may optionally include information such as a batch number of a batch to which the first transaction belongs.

When transactions in one subbatch are confirmed, the subbatch may reach a to-be-written state. As discussed above, a quantity of transactions in a consensus batch is usually less than a quantity of transactions included in one block, and a quantity of transactions in a subbatch is smaller. Therefore, when all transactions in a plurality of transaction batches are determined as confirmable transactions, the plurality of confirmed transaction batches may be written into a block.

FIG. 6 is a schematic diagram of transaction status conversion, according to an embodiment. In FIG. 6, changes in a processing status are shown from the perspective of a transaction. As shown in FIG. 6, after the node receives a transaction Tx sent by a user, the transaction is initially in a state for consensus to be reached. Next, through a consensus mechanism between the nodes, consensus is reached on the transaction, to reach a to-be-processed state. After consensus is reached, the transaction may be separately made persistent and executed. Through persistent storing, the transaction may reach a persistent consensus state. Through execution, the transaction may reach an executed state. If either a persistence process or an execution process is faulty, for example, persistence fails or execution encounters an error, the transaction returns to a to-be-processed state, and processing is performed again. When it is determined in the manner in FIG. 4 that sufficient nodes have completed persistence and execution of the transaction, the transaction reaches a confirmable state. The nodes may send a confirmation message for the transaction to the user. Subsequently, when there are sufficient confirmable transactions, the transaction and other confirmed transactions are written together into a block.

In summary, according to the embodiments of this specification, consensus is initiated in batches, and a flow execution result is summarized in subbatches with fewer transactions to confirm a transaction, thereby reducing a consensus wait time, an execution wait time, and a confirmation wait time of a transaction, and significantly reducing a transaction confirmation delay. In addition, in the foregoing solution, in a manner of separating and running in parallel persistence and transaction execution, persistence overheads are concealed, thereby reducing the impact of a small batch of consensus on the TPS of a platform and ensuring TPS performance of the platform.

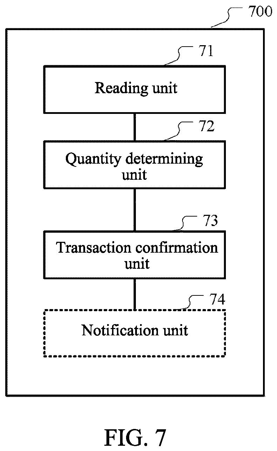

According to an embodiment in another aspect, a transaction confirmation apparatus in a blockchain network is provided. The apparatus may be deployed in any first node in N nodes included in the blockchain network. The first node may be embodied as any device, platform or device cluster having computing and processing capabilities. In addition, the first node keeps a persistent consensus list, a flow execution list, and a largest confirmation list. The persistent consensus list is used to record largest batch information for which each of the N nodes completes persistent storing for a transaction batch on which consensus is reached. The flow execution list is used to record an execution result by each node of a transaction subbatch in the transaction batch on which consensus is reached. The largest confirmation list is used to record largest subbatch information confirmed in a current node. FIG. 7 is a schematic block diagram of a transaction confirmation apparatus in a node, according to an embodiment. As shown in FIG. 7, the apparatus 700 includes:
a reading unit 71, configured to read a current largest subbatch from the largest confirmation list in response to detecting a first event, where the first event is an event causing the persistent consensus list or the flow execution list to change;
a quantity determining unit 72, configured to: sequentially use a subbatch following the current largest subbatch as a target subbatch, determine, based on the flow execution list, a first quantity of nodes that generate consistent execution results for the target subbatch, and determine, based on the persistent consensus list, a second quantity of nodes that complete persistent storing for a target batch to which the target subbatch belongs; and
a transaction confirmation unit 73, configured to: when the first quantity and the second quantity both meet a consensus fault tolerance quantity corresponding to the N nodes, determine transactions in the target subbatch as confirmable transactions, and update the current largest subbatch with the target subbatch.

In an embodiment, the first event includes receiving a first message from another node, where the first message indicates updated largest transaction batch information for which the another node completes persistent storing; and largest transaction batch information corresponding to the another node is updated in the persistent consensus list in response to the first message.

In another embodiment, the first event includes receiving a second message from another node, where the second message indicates an execution result of a newly added transaction subbatch by the another node; and the execution result of the newly added transaction subbatch is added to the flow execution list in response to the second message.

In an implementation, the persistent consensus list includes a first entry corresponding to the first node; and the apparatus further includes (not shown):
a consensus acquisition unit, configured to acquire, from a volatile storage, a first batch on which consensus is reached, where the first batch is a next transaction batch following a batch recorded in the first entry; and
a transaction processing unit, configured to: start to perform persistent storing on the first batch, and add transactions in the first batch to an execution queue, for sequential execution to generate a subbatch execution result.

In an embodiment of the foregoing implementation, the first event includes updating records in the first entry with the first batch when the transaction processing unit completes the persistent storing of the first batch.

In such a case, the apparatus 700 may further include a first broadcast unit (not shown), configured to broadcast a third message to other nodes of the N nodes after the first event is detected, where the third message indicates that the largest transaction batch for which the first node completes persistent storing is updated to the first batch.

In another embodiment of the foregoing implementation, the flow execution list includes a second entry corresponding to the first node, and the first event includes adding a first execution result of a first subbatch in the first batch to the second entry when the first execution result is generated.

In such a case, the apparatus 700 may further include a second broadcast unit (not shown), configured to broadcast a fourth message to other nodes of the N nodes after the first event is detected, where the fourth message indicates the first execution result generated by the first node for the first subbatch.

According to an embodiment, the execution result of the transaction subbatch includes a hash value of the execution result of the transaction subbatch.

In an embodiment, the largest batch information is the largest batch number; and the quantity determining unit 72 is configured to: in the persistent consensus list, determine, as the second quantity, a quantity of nodes whose batch numbers are among N largest batch numbers respectively corresponding to the N nodes that are greater than or equal to a batch number of the target batch.

According to an implementation, the apparatus 700 further includes a notification unit 74, configured to:
for any first transaction in the target subbatch, determine whether the first transaction is a local transaction, where the local transaction is a transaction received by the first node from a user client; and
if the first transaction is a local transaction, determine a first user client corresponding to the first transaction, and send a first confirmation message to the first user client, where the first confirmation message is used to indicate that the first transaction has been accurately executed.

Further, for example, the first confirmation message includes a transaction identifier of the first transaction, execution results of all transactions in the target subbatch, and signatures of the nodes of the first quantity.

According to an embodiment, a quantity of transactions in the transaction batch is less than a quantity of transactions included in one block; and the apparatus 700 further includes a block forming unit (not shown), configured to: when all transactions in a plurality of transaction batches are determined as confirmable transactions, form a block based on the plurality of transaction batches.

By using the apparatus in the foregoing aspect, a transaction confirmation delay can be reduced, and TPS performance of the platform can be ensured.

According to an embodiment in another aspect, a computer-readable storage medium is further provided, storing a computer program, the computer program, when executed by a computer, causing the computer to perform the method described with reference to FIG. 4.

According to an embodiment of still another aspect, a computing device is further provided, including a memory and a processor, the memory storing an executable code, the processor, when executing the executable code, implementing the method described with reference to FIG. 4.

A person skilled in the art should be aware of that in the one or more examples, the functions described in this application may be implemented by hardware, software, firmware, or a combination of the above. When implemented by using software, the functions can be stored in a computer-readable medium or can be used as one or more instructions or code in a computer-readable medium for transferring.

The foregoing specific implementations further describe the objectives, technical solutions in detail, and beneficial effects of this application. It should be appreciated that the foregoing descriptions are merely specific implementations of this application, but are not intended to limit the protection scope of this application. The invention is defined by the appended claims.

## Claims

1. A transaction confirmation method in a blockchain network, the blockchain network comprising N nodes, the method being performed by any first node in the N nodes, wherein the first node keeps a persistent consensus list, a flow execution list, and a largest confirmation list,
wherein the persistent consensus list is used to record largest batch information for which each of the N nodes completes persistent storing for a transaction batch on which consensus is reached, the largest batch information is a batch with a highest batch number in a sequence of batches and is recorded for each of the N nodes,
wherein the flow execution list is used to record at least one execution result, generated by each of the N nodes, of a transaction subbatch in the transaction batch on which consensus is reached,
wherein the transaction subbatch includes a smaller number of transactions than the transaction batch, and
wherein the largest confirmation list is used to record largest subbatch information indicating a batch number of a current largest subbatch and a subbatch number of the current largest subbatch, wherein the current largest subbatch is a subbatch with a highest batch number, in a sequence of subbatches, which includes one or more transactions that have been confirmed in a current node, each of the one or more transactions in the subbatch are confirmed when a transaction execution of the subbatch meets a preset condition, and the method comprises:
reading (42) the current largest subbatch from the largest confirmation list in response to detecting (41) a first event, wherein the first event is an event causing the persistent consensus list or the flow execution list to change;
sequentially using (43) a next subbatch, which is next in sequence to the current largest subbatch, as a target subbatch;
determining (44), based on the flow execution list, a first quantity of nodes that have generated and reported execution results for the target subbatch and the execution results for the target subbatch by the first quantity of nodes are the same as each other;
determining (4), based on the persistent consensus list, a second quantity of nodes that have completed persistent storing for a target batch to which the target subbatch belongs; and
when the first quantity and the second quantity both meet a consensus fault tolerance quantity corresponding to the N nodes, determining (47) transactions in the target subbatch as confirmable transactions, and updating (48) the current largest subbatch in the largest confirmation list with the target subbatch,
wherein the confirmable transactions are transactions that are to be written into a block once there is a predefined number of confirmable transactions, andwherein the consensus fault tolerance quantity indicates a minimum number of nodes, among the N node, required to ensure a fault-tolerant consensus.

2. The method according to claim 1, wherein the first event comprises receiving a first message from another node, wherein the first message indicates updated largest transaction batch information for which the another node completes persistent storing; and largest transaction batch information corresponding to the another node is updated in the persistent consensus list in response to the first message.

3. The method according to claim 1, wherein the first event comprises receiving a second message from another node, wherein the second message indicates an execution result of a newly added transaction subbatch by the another node; and the execution result of the newly added transaction subbatch is added to the flow execution list in response to the second message.

4. The method according to claim 1, wherein the persistent consensus list comprises a first entry corresponding to the first node; and before the detecting a first event, the method further comprises:
acquiring, from a volatile storage, a first batch on which consensus is reached, wherein the first batch is a next transaction batch following a batch recorded in the first entry; and
starting to perform persistent storing on the first batch, and adding transactions in the first batch to an execution queue, for sequential execution to generate a subbatch execution result.

5. The method according to claim 4, wherein the first event comprises updating records in the first entry with the first batch when the persistent storing of the first batch is completed.

6. The method according to claim 5, further comprising: broadcasting a third message to other nodes of the N nodes after the first event is detected, wherein the third message indicates that the largest transaction batch for which the first node completes persistent storing is updated to the first batch.

7. The method according to claim 4, wherein the flow execution list comprises a second entry corresponding to the first node, and the first event comprises adding a first execution result of a first subbatch in the first batch to the second entry when the first execution result is generated.

8. The method according to claim 7, further comprising: broadcasting a fourth message to other nodes of the N nodes after the first event is detected, wherein the fourth message indicates the first execution result generated by the first node for the first subbatch.

9. The method according to claim 1, wherein the execution result of the transaction subbatch comprises a hash value of the execution result of the transaction subbatch.

10. The method according to claim 1, wherein the determining a second quantity of nodes that have completed persistent storing for a target batch to which the target subbatch belongs comprises:
in the persistent consensus list, determining, as the second quantity, a quantity of nodes whose batch numbers are among N largest batch numbers respectively corresponding to the N nodes that are greater than or equal to a batch number of the target batch.

11. The method according to claim 1, wherein after determining transactions in the target subbatch as confirmable transactions, the method further comprises:
for any first transaction in the target subbatch, determining whether the first transaction is a local transaction, wherein the local transaction is a transaction directly received by the first node from a user client; and
if the first transaction is a local transaction, determining a first user client corresponding to the first transaction, and sending a first confirmation message to the first user client, wherein the first confirmation message is used to indicate that the first transaction has been accurately executed.

12. The method according to claim 11, wherein the first confirmation message comprises a transaction identifier of the first transaction, execution results of all transactions in the target subbatch, and signatures of the nodes of the first quantity.

13. The method according to claim 1, wherein a quantity of transactions in the transaction batch is less than a quantity of transactions included in one block; and
the method further comprises: when all transactions in a plurality of transaction batches are determined as confirmable transactions, forming a block based on the plurality of transaction batches.

14. A computer-readable storage medium, storing a computer program, the computer program, when executed by a computer, causing the computer to perform the method according to any one of the preceding claims.

15. A computing device, comprising a memory and a processor, the memory storing an executable code, the processor, when executing the executable code, implementing the method according to any one of claims 1 to 13.

## Patentansprüche

1. Transaktionsbestätigungsverfahren in einem Blockchain-Netzwerk, wobei das Blockchain-Netzwerk N Knoten umfasst, wobei das Verfahren von einem beliebigen ersten Knoten in den N Knoten durchgeführt wird, wobei der erste Knoten eine Liste für persistenten Konsens, eine Liste für Flussausführung und eine Liste für größte Bestätigung führt,
wobei die Liste für persistenten Konsens verwendet wird, um größte Stapelinformationen aufzuzeichnen, für die jeder der N Knoten persistentes Speichern für einen Transaktionsstapel abschließt, für den Konsens erreicht wird, wobei die größten Stapelinformationen ein Stapel mit einer höchsten Stapelzahl in einer Sequenz von Stapeln sind und für jeden der N Knoten aufgezeichnet werden,
wobei die Liste für Flussausführung verwendet wird, um mindestens ein von jedem der N Knoten erzeugtes Ausführungsergebnis eines Transaktionsunterstapels in dem Transaktionsstapel aufzuzeichnen, für den Konsens erreicht wird,
wobei der Transaktionsunterstapel eine kleinere Anzahl von Transaktionen als der Transaktionsstapel enthält, und
wobei die Liste für größte Bestätigung verwendet wird, um größte Unterstapelinformationen aufzuzeichnen, die eine Stapelzahl eines aktuell größten Unterstapels und eine Unterstapelzahl des aktuell größten Unterstapels angeben, wobei der aktuell größte Unterstapel ein Unterstapel mit einer höchsten Stapelzahl in einer Sequenz von Unterstapeln ist, die eine oder mehrere Transaktionen enthält, die in einem aktuellen Knoten bestätigt wurden, wobei jede der einen oder mehreren Transaktionen im Unterstapel bestätigt wird, wenn eine Transaktionsausführung des Unterstapels eine voreingestellte Bedingung erfüllt, und das Verfahren umfasst:
Lesen (42) des aktuell größten Unterstapels aus der Liste für größte Bestätigung als Reaktion auf ein Erkennen (41) eines ersten Ereignisses, wobei das erste Ereignis ein Ereignis ist, das bewirkt, dass sich die Liste für persistenten Konsens oder die Liste für Flussausführung ändert;
sequenzielles Verwenden (43) eines nächsten Unterstapels, der der Reihe nach dem aktuell größten Unterstapel folgt, als einen Ziel-Unterstapel;
Bestimmen (44), basierend auf der Liste für Flussausführung, einer ersten Anzahl von Knoten, die Ausführungsergebnisse für den Ziel-Unterstapel erzeugt und gemeldet haben, und wobei die Ausführungsergebnisse für den Ziel-Unterstapel durch die erste Anzahl von Knoten einander gleich sind;
Bestimmen (4), basierend auf der Liste für persistenten Konsens, einer zweiten Anzahl von Knoten, die persistentes Speichern für einen Ziel-Stapel abgeschlossen haben, zu dem der Ziel-Unterstapel gehört; und
wenn die erste Anzahl und die zweite Anzahl beide eine Konsensfehlertoleranzanzahl erfüllen, die den N Knoten entspricht, Bestimmen (47) von Transaktionen im Ziel-Unterstapel als bestätigbare Transaktionen und Aktualisieren (48) des aktuell größten Unterstapels in der Liste für größte Bestätigung mit dem Ziel-Unterstapel,
wobei die bestätigbaren Transaktionen Transaktionen sind, die in einen Block geschrieben werden sollen, sobald es eine vordefinierte Anzahl von bestätigbaren Transaktionen gibt, und wobei die Konsensfehlertoleranzanzahl eine Mindestzahl von Knoten unter den N Knoten angibt, die erforderlich ist, um einen fehlertoleranten Konsens sicherzustellen.

2. Verfahren nach Anspruch 1, wobei das erste Ereignis ein Empfangen einer ersten Nachricht von einem anderen Knoten umfasst, wobei die erste Nachricht aktualisierte größte Transaktionsstapelinformationen angibt, für die der andere Knoten persistentes Speichern abschließt; und größte Transaktionsstapelinformationen, die dem anderen Knoten entsprechen, in der Liste für persistenten Konsens als Reaktion auf die erste Nachricht aktualisiert werden.

3. Verfahren nach Anspruch 1, wobei das erste Ereignis ein Empfangen einer zweiten Nachricht von einem anderen Knoten umfasst, wobei die zweite Nachricht ein Ausführungsergebnis eines neu hinzugefügten Transaktionsunterstapels durch den anderen Knoten angibt; und das Ausführungsergebnis des neu hinzugefügten Transaktionsunterstapels als Reaktion auf die zweite Nachricht zu der Liste für Flussausführung hinzugefügt wird.

4. Verfahren nach Anspruch 1, wobei die Liste für persistenten Konsens einen ersten Eintrag umfasst, der dem ersten Knoten entspricht; und das Verfahren vor dem Erkennen eines ersten Ereignisses ferner umfasst:
Erfassen, von einem flüchtigen Speicher, eines ersten Stapels, für den Konsens erreicht wird, wobei der erste Stapel ein nächster Transaktionsstapel ist, der auf einen im ersten Eintrag aufgezeichneten Stapel folgt; und
Beginnen, ein persistentes Speichern an dem ersten Stapel durchzuführen, und Hinzufügen von Transaktionen in dem ersten Stapel zu einer Ausführungswarteschlange zur sequenziellen Ausführung, um ein Ausführungsergebnis eines Unterstapels zu erzeugen.

5. Verfahren nach Anspruch 4, wobei das erste Ereignis ein Aktualisieren von Aufzeichnungen im ersten Eintrag mit dem ersten Stapel umfasst, wenn das persistente Speichern des ersten Stapels abgeschlossen ist.

6. Verfahren nach Anspruch 5, ferner umfassend: Rundsenden einer dritten Nachricht an andere Knoten der N Knoten, nachdem das erste Ereignis erkannt wurde, wobei die dritte Nachricht angibt, dass der größte Transaktionsstapel, für den der erste Knoten persistentes Speichern abschließt, auf den ersten Stapel aktualisiert wird.

7. Verfahren nach Anspruch 4, wobei die Liste für Flussausführung einen zweiten Eintrag umfasst, der dem ersten Knoten entspricht, und das erste Ereignis ein Hinzufügen eines ersten Ausführungsergebnisses eines ersten Unterstapels in dem ersten Stapel zu dem zweiten Eintrag umfasst, wenn das erste Ausführungsergebnis erzeugt wird.

8. Verfahren nach Anspruch 7, ferner umfassend: Rundsenden einer vierten Nachricht an andere Knoten der N Knoten, nachdem das erste Ereignis erkannt wurde, wobei die vierte Nachricht das erste Ausführungsergebnis angibt, das von dem ersten Knoten für den ersten Unterstapel erzeugt wird.

9. Verfahren nach Anspruch 1, wobei das Ausführungsergebnis des Transaktionsunterstapels einen Hash-Wert des Ausführungsergebnisses des Transaktionsunterstapels umfasst.

10. Verfahren nach Anspruch 1, wobei das Bestimmen einer zweiten Anzahl von Knoten, die persistentes Speichern für einen Ziel-Stapel abgeschlossen haben, zu dem der Ziel-Unterstapel gehört, umfasst:
in der Liste für persistenten Konsens, Bestimmen, als die zweite Anzahl, einer Anzahl von Knoten, deren Stapelzahlen unter N größten Stapelzahlen sind, die jeweils den N Knoten entsprechen, die größer als oder gleich einer Stapelzahl des Ziel-Stapels sind.

11. Verfahren nach Anspruch 1, wobei das Verfahren nach dem Bestimmen von Transaktionen im Ziel-Unterstapel als bestätigbare Transaktionen ferner umfasst:
für jede erste Transaktion im Ziel-Unterstapel, Bestimmen, ob die erste Transaktion eine lokale Transaktion ist, wobei die lokale Transaktion eine Transaktion ist, die direkt durch den ersten Knoten von einem Benutzer-Client empfangen wird; und
wenn die erste Transaktion eine lokale Transaktion ist, Bestimmen eines ersten Benutzer-Clients, der der ersten Transaktion entspricht, und Senden einer ersten Bestätigungsnachricht an den ersten Benutzer-Client, wobei die erste Bestätigungsnachricht verwendet wird, um anzugeben, dass die erste Transaktion genau ausgeführt wurde.

12. Verfahren nach Anspruch 11, wobei die erste Bestätigungsnachricht eine Transaktionskennung der ersten Transaktion, Ausführungsergebnisse aller Transaktionen im Ziel-Unterstapel und Signaturen der Knoten der ersten Anzahl umfasst.

13. Verfahren nach Anspruch 1, wobei eine Anzahl von Transaktionen im Transaktionsstapel kleiner als eine Anzahl von Transaktionen ist, die in einem Block enthalten sind; und
das Verfahren ferner umfasst: wenn alle Transaktionen in mehreren Transaktionsstapeln als bestätigbare Transaktionen bestimmt werden, Bilden eines Blocks basierend auf den mehreren Transaktionsstapeln.

14. Computerlesbares Speichermedium, das ein Computerprogramm speichert, wobei das Computerprogramm, wenn es von einem Computer ausgeführt wird, den Computer veranlasst, das Verfahren nach einem der vorhergehenden Ansprüche durchzuführen.

15. Rechenvorrichtung, umfassend einen Speicher und einen Prozessor, wobei der Speicher einen ausführbaren Code speichert, wobei der Prozessor, wenn er den ausführbaren Code ausführt, das Verfahren nach einem der Ansprüche 1 bis 13 implementiert.

## Revendications

1. Procédé de confirmation de transaction dans un réseau de chaînes de blocs, le réseau de chaînes de blocs comprenant N noeuds, le procédé étant réalisé par un premier noeud quelconque parmi les N noeuds, dans lequel le premier noeud conserve une liste de consensus persistants, une liste d'exécution de flux et une liste de confirmation la plus grande,
dans lequel la liste de consensus persistants est utilisée pour enregistrer une information de lot le plus grand pour laquelle chacun des N noeuds achève un stockage persistant pour un lot de transaction sur lequel un consensus est atteint, dans lequel l'information de lot le plus grand est un lot avec un numéro de lot le plus élevé dans une séquence de lots et est enregistrée pour chacun des N noeuds,
dans lequel la liste d'exécution de flux est utilisée pour enregistrer au moins un résultat d'exécution, généré par chacun des N noeuds, d'un sous-lot de transaction dans le lot de transaction sur lequel un consensus est atteint,
dans lequel le sous-lot de transaction comprend un nombre de transactions plus petit que le lot de transaction, et
dans lequel la liste de confirmation la plus grande est utilisée pour enregistrer une information de sous-lot le plus grand indiquant un numéro de lot d'un sous-lot actuel le plus grand et un numéro de sous-lot du sous-lot actuelle le plus grand, dans lequel le sous-lot actuel le plus grand est un sous-lot avec un numéro de lot le plus élevé, dans une séquence de sous-lots, qui comprend une ou plusieurs transactions qui ont été confirmées dans un noeud actuel, dans lequel chacune des une ou plusieurs transactions dans le sous-lot sont confirmées lorsqu'une exécution de transaction du sous-lot satisfait à une condition prédéfinie, et le procédé comprend :
la lecture (42) du sous-lot actuel le plus grand à partir de la liste de confirmation la plus grande en réponse à la détection (41) d'un premier événement, dans lequel le premier événement est un événement amenant la liste de consensus persistants ou la liste d'exécution de flux à changer ;
l'utilisation séquentielle (43) d'un sous-lot suivant, qui est le suivant en séquence du sous-lot actuel le plus grand, en tant que sous-lot cible ;
la détermination (44), sur la base de la liste d'exécution de flux, d'une première quantité de noeuds qui ont généré et rapporté des résultats d'exécution pour le sous-lot cible et les résultats d'exécution pour le sous-lot cible par la première quantité de noeuds sont identiques les uns aux autres ;
la détermination (4), sur la base de la liste de consensus persistants, d'une seconde quantité de noeuds qui ont achevé un stockage persistant pour un lot cible auquel le sous-lot cible appartient ; et
lorsque la première quantité et la seconde quantité satisfont toutes deux à une quantité de tolérance de défaut de consensus correspondant aux N noeuds, la détermination (47) de transactions dans le sous-lot cible en tant que transactions confirmables, et la mise à jour (48) du sous-lot actuel le plus grand dans la liste de confirmation la plus grande avec le sous-lot cible,
dans lequel les transactions confirmables sont des transactions qui doivent être écrites dans un bloc une fois qu'il y a un nombre prédéfini de transactions confirmables, et dans lequel la quantité de tolérance de défaut de consensus indique un nombre minimum de noeuds, parmi les N noeuds, requis pour assurer un consensus tolérant aux défauts.

2. Procédé selon la revendication 1, dans lequel le premier événement comprend la réception d'un premier message provenant d'un autre noeud, dans lequel le premier message indique une information de lot de transaction le plus grand mise à jour pour laquelle l'autre noeud achève un stockage persistant ; et une information de lot de transaction le plus grand correspondant à l'autre noeud est mise à jour dans la liste de consensus persistants en réponse au premier message.

3. Procédé selon la revendication 1, dans lequel le premier événement comprend la réception d'un second message provenant d'un autre noeud, dans lequel le second message indique un résultat d'exécution d'un sous-lot de transaction nouvellement ajouté par l'autre noeud ; et le résultat d'exécution du sous-lot de transaction nouvellement ajouté est ajouté à la liste d'exécution de flux en réponse au second message.

4. Procédé selon la revendication 1, dans lequel la liste de consensus persistants comprend une première entrée correspondant au premier noeud ; et avant la détection d'un premier événement, le procédé comprend en outre :
l'acquisition, à partir d'un stockage volatil, d'un premier lot sur lequel un consensus est atteint, dans lequel le premier lot est un lot de transaction suivant qui suit un lot enregistré dans la première entrée ; et
le démarrage de la réalisation d'un stockage persistant sur le premier lot, et l'ajout de transactions dans le premier lot à une file d'attente d'exécution, pour une exécution séquentielle afin de générer un résultat d'exécution de sous-lot.

5. Procédé selon la revendication 4, dans lequel le premier événement comprend la mise à jour d'enregistrements dans la première entrée avec le premier lot lorsque le stockage persistant du premier lot est achevé.

6. Procédé selon la revendication 5, comprenant en outre : la diffusion d'un troisième message à d'autres noeuds des N noeuds après que le premier événement est détecté, dans lequel le troisième message indique que le lot de transaction le plus grand pour lequel le premier noeud achève un stockage persistant est mis à jour au premier lot.

7. Procédé selon la revendication 4, dans lequel la liste d'exécution de flux comprend une seconde entrée correspondant au premier noeud, et le premier événement comprend l'ajout d'un premier résultat d'exécution d'un premier sous-lot dans le premier lot à la seconde entrée lorsque le premier résultat d'exécution est généré.

8. Procédé selon la revendication 7, comprenant en outre : la diffusion d'un quatrième message à d'autres noeuds des N noeuds après que le premier événement est détecté, dans lequel le quatrième message indique le premier résultat d'exécution généré par le premier noeud pour le premier sous-lot.

9. Procédé selon la revendication 1, dans lequel le résultat d'exécution du sous-lot de transaction comprend une valeur de hachage du résultat d'exécution du sous-lot de transaction.

10. Procédé selon la revendication 1, dans lequel la détermination d'une seconde quantité de noeuds qui ont achevé un stockage persistant pour un lot cible auquel le sous-lot cible appartient comprend :
dans la liste de consensus persistants, la détermination, en tant que seconde quantité, d'une quantité de noeuds dont les numéros de lot sont parmi N numéros de lot les plus grands correspondant respectivement aux N noeuds qui sont supérieurs ou égaux à un numéro de lot du lot cible.

11. Procédé selon la revendication 1, dans lequel, après la détermination de transactions dans le sous-lot cible comme étant des transactions confirmables, le procédé comprend en outre :
pour toute première transaction dans le sous-lot cible, la détermination si la première transaction est une transaction locale, dans lequel la transaction locale est une transaction reçue directement par le premier noeud à partir d'un client utilisateur ; et
si la première transaction est une transaction locale, la détermination d'un premier client utilisateur correspondant à la première transaction, et l'envoi d'un premier message de confirmation au premier client utilisateur, dans lequel le premier message de confirmation est utilisé pour indiquer que la première transaction a été exécutée avec précision.

12. Procédé selon la revendication 11, dans lequel le premier message de confirmation comprend un identifiant de transaction de la première transaction, des résultats d'exécution de toutes les transactions dans le sous-lot cible et des signatures des noeuds de la première quantité.

13. Procédé selon la revendication 1, dans lequel une quantité de transactions dans le lot de transaction est inférieure à une quantité de transactions incluses dans un bloc ; et
le procédé comprend en outre : lorsque toutes les transactions dans une pluralité de lots de transaction sont déterminées comme étant des transactions confirmables, la formation d'un bloc sur la base de la pluralité de lots de transaction.

14. Support de stockage lisible par ordinateur, stockant un programme informatique, le programme informatique, lorsqu'il est exécuté par un ordinateur, amenant l'ordinateur à réaliser le procédé selon l'une quelconque des revendications précédentes.

15. Dispositif informatique, comprenant une mémoire et un processeur, la mémoire stockant un code exécutable, le processeur, lorsqu'il exécute le code exécutable, mettant en oeuvre le procédé selon l'une quelconque des revendications 1 à 13.
